# EUROPEAN PATENT SPECIFICATION

(11) **EP 2 185 332 B1**
(45) Date of publication and mention of the grant of the patent: **31.12.2014**
(21) Application number: 08796566.1
(22) Date of filing: 24.07.2008
(51) Int. Cl.: B29C 33/48

(54) **MULTI-PIECE AUTOMATED FIBER PLACEMENT MANDREL AUTOMATED CLAMPING AND INDEXING SYSTEM as well as method for clamping and indexing.**
AUTOMATISIERTES SPANN- UND INDEXIERSYSTEM FÜR MEHRTEILIGEN AUTOMATISIERTEN FASERPOSITIONIERUNGSDORN SOWIE SPANN- UND INDEXIERVERFAHREN
SERRAGE AUTOMATISÉ DE MANDRIN MULTIPIÈCE DE POSITIONNEMENT DE FIBRE AUTOMATISÉ ET SYSTÈME D'INDEXAGE ET PROCÉDÉ DE SERRAGE ET D'INDEXAGE

(30) Priority: 31.07.2007 US 831817
(43) Date of publication of application: 19.05.2010
(73) Proprietor: The Boeing Company, Chicago, IL 60606-2016 (US)
(72) Inventor: CLEARY, William, Russell, Jr., Mansfield, TX 76063 (US); FLING, Brian, K., Dallas, TX 75234 (US); MANN, Thomas, H., II, Burleson, TX 76028 (US); JANICKI, Peter, Mount Vernon, WA 98273 (US); WEST, Ed, Blaine, WA 98231 (US); HOLMES, Brian, Greenbank, WA 98253 (US); SMITHERS, Fred, Sedro Woolley, WA 98284 (US)
(74) Representative: Howson, Richard G.B.
(86) International application number: PCT/US2008/071050
(87) International publication number: WO 2009/018097

(56) References cited:
- DE-A1-102004 039 602
- FR-A1- 2 304 804
- US-A- 2 845 658
- US-A1- 2005 218 576
- US-A1- 2006 180 704
- US-B2- 7 166 251

## Description

### TECHNICAL FIELD

The invention relates generally to a lay-up mandrel assembly for a one-piece barrel fuselage, and more particularly to a lay-up mandrel assembly for a one-piece barrel fuselage having an automated clamping and indexing system.

### BACKGROUND OF THE INVENTION

Automated Fiber Placement (AFP) mandrels are used in the aerospace industry to assist in the formation of parts used in building aircraft, such as composite materials. Barrel-shaped components, such as fuselage skins and stringers, are typically laid up on mandrels composed of multiple rigid segments during manufacturing of the barrel-shaped components. During the manufacturing process, the barrel-shaped component laid up on the mandrel undergoes a curing process, typically performed in an autoclave in order to set the shape of the component part. Once cured, the mandrel segments are then dismantled and separated from the part being manufactured in order to remove the barrel structure from the mandrel. In the industry, there is a need to have a way to affix these mandrel segments together in order to form the proper tooling for construction of aircraft parts.

In the past, the aerospace industry would typically affix and detach these mandrel segments by bolting and unbolting the mandrel segments. However, this process is not desirable because it is not very robust, and the bolting process requires a great deal of time to perform which slows down the production process for forming the barrel-shaped components for use in aircraft. The mandrel segments, particularly when bolted together, may require large handling equipment to assist mechanics with the assemble/disassemble process. Further, by using bolts, sometimes personnel are required to climb inside the mandrel to unfasten bolts and guide the equipment as described in United States Patent No. 7,166,251 which is assigned to The Boeing Company. The process of bolting, unbolting and re-bolting segments in the assembly line also may not be flexible and lean enough for use in certain manufacturing applications.

Clamping mechanisms sometimes may be used in place of bolting mechanisms. These prior art clamping designs possessed mechanical means to lock and unlock, and these clamps also included a large bar running through the mandrels that actuated back and forth to engage and disengage the clamps. Clamping or bolting the mandrel segments using the above-described approaches can be very time consuming and prone to human error. The assembly method of the mandrel does not make manual bolting or clamping desirable due to the limited amount of space available. The factory flow requirements of the mandrel assembly does not lend itself to manual clamping or bolting, and therefore there is a need for a faster automated method to be established that would ensure not only precise location of the mandrel segments but also ensure that the joint is securely fastened.

Indexing is a process to locate in a precise manner how the mandrel segments are positioned with respect to each other. A typical mechanism utilized for indexing is called a cup and cone configuration wherein the cup and cone are aligned between the mandrel segments to be affixed together such that the mandrel segments may be properly positioned in order to support the aircraft part during the manufacturing process. While indexing via a cup and cone configuration generally results in accurate alignment of the mandrel segments, there is a need to integrate an indexing mechanism with a mechanism utilized for fastening the mandrel segments together so as to ensure alignment and secure fastening of the mandrel segments.

Document DE-A-102004039602 discloses a joining device. The device has a base and a connection part for attachment with respective components. A handhold part linked to the base is swivelable around a joint axis, and a tenterhook (6) is tiltably fastened to the axis. A free end of the tenterhook pierces an opening of the connection part. A joint section (8) of the part engages into a slot of the base by the hook, when stretching the part from its opened position to the closed position.

Document US-A-2845658 discloses a collapsible mandrel with a clamp body and clamp arms.

The present invention is set out in the independent claims, with some optional features set out in the claims dependent thereto.

### BRIEF SUMMARY OF THE INVENTION

An embodiment of the present invention is directed to an integrated clamping and indexing system comprising a clamp body, a clamp arm eccentrically mounted to the clamp body and having a hooklike structure, and a clamp index attached to said clamp body wherein the clamp index performs indexing simultaneously with clamping upon actuation of the clamp arm. This integrated clamping and indexing system also preferably is comprised of a clamp receiver integrated with a receiver index wherein the clamp receiver locks into position with the clamp arm, and the receiver index contacts with the clamp index when the clamp arm is actuated. This system, according to embodiments of the present invention, may be used to join mandrel segments and additionally or alternatively may be used to join mandrel segments to end rings. The system further provides that face-sheets of the mandrel segments align and contact with each other when the clamp arm is actuated.

Another embodiment of the present invention is directed to a method for integrated clamping and indexing comprising exerting pull-up force on a clamp arm, actuating the clamp arm such that the clamp arm affixes to a clamp receiver, and pulling down a clamp index integrated with the clamp arm, wherein the clamp index contacts with a receiver index integrated with the clamp receiver upon actuation of the clamp arm. The pull-up force preferably moves the clamp arm in an eccentric manner to lock in place with the clamp receiver. Further embodiments provide that the clamp index has a cup-like configuration and the receiver index has a cone-like configuration. The indexing mechanism formed by the clamp index and the receiver index preferably guides the clamp arm into place relative to the clamp receiver.

In a further embodiment of the present invention, a mandrel clamp and index assembly is provided wherein the assembly comprises a clamp body, clamp arms integrated with the clamp body, and a clamp cone index integrated with the clamp body. Upon actuation of the clamp arms, the clamp cone index makes contact with a receiver index to guide the clamp arms to lock in place with a clamp receiver. The clamp receiver preferably affixes to the clamp arms by a pulling-up motion upon actuation of the clamp arms. Further embodiments of the assembly include a clamp mounting pan which provides a support for mounting clamp brackets which support the clamp arms.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

### BRIEF DESCRIPTION OF THE DRAWINGS

For a more complete understanding of the present invention, reference is now made to the following descriptions taken in conjunction with the accompanying drawings, in which:
FIGURE 1 depicts an isometric view of mandrels incorporating mandrel seam and end ring clamping mechanisms according to an embodiment of the present invention;
FIGURE 2 depicts an embodiment of the present invention illustrating the mandrel clamp mechanism positioned when the clamp mechanism is not in a locked position;
FIGURE 3 depicts an embodiment of the present invention illustrating the mandrel clamp mechanism positioned when the clamp mechanism is engaged;
FIGURE 4 depicts a side view of the mandrel clamping and indexing mechanism illustrating the engagement of the indexing and clamping mechanisms according to an embodiment of the present invention;
FIGURE 5 depicts how the mandrel clamping and indexing mechanism is mounted according to an embodiment of the present invention; and
FIGURE 6 depicts how the clamping and indexing mechanism engages an end ring according to an embodiment of the present invention.

### DETAILED DESCRIPTION OF THE INVENTION

Embodiments of the present invention provide a multi-piece automated fiber placement mandrel clamping and indexing mechanism wherein a clamping mechanism is used in order to secure mandrel segments together as well as to join mandrel segments to end rings. The clamping mechanism is preferably integrated with the mandrel, and the clamping mechanism provides an increased clamping force in order to more fully support and fasten the mandrel segments in an automated manner. The clamping and indexing mechanism of the present invention can preferably withstand the autoclave heat and pressure that is typically experienced during the curing part of the manufacturing process. The clamping mechanism is also integrated with an indexing mechanism according to embodiments of the present invention such that mandrel segments will preferably remain securely connected and aligned until air is applied to the clamping and indexing assembly in order to unclamp the mandrel segments and remove the part being manufactured.

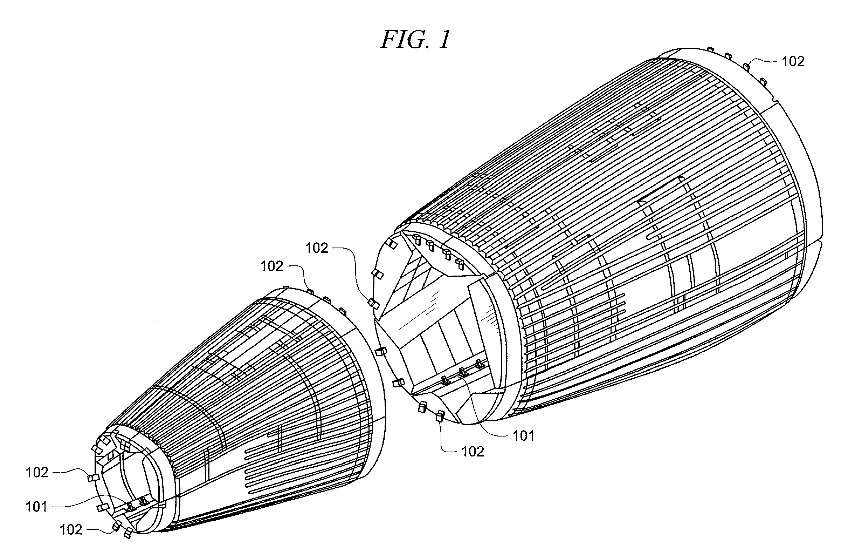

FIGURE 1 depicts mandrels incorporating mandrel seam and end ring clamping mechanisms according to an embodiment of the present invention. Mandrel seam clamps 101 are preferably located along the entire seam, and these locations are preferably attachment points where the mandrel segments are preferably fastened together utilizing an embodiment of the clamping mechanism of the present invention. End rings are preferably affixed to the mandrels at both the narrow cone-like end and the wider end of the mandrels. Accordingly, end ring clamps 102 are also preferably present on the mandrels at both ends of the mandrels so as to secure the mandrel to the end rings. Both mandrel seam clamps 101 and end ring clamps 102 are used to reinforce the attachment of the mandrel segments during the manufacturing process. Mandrel seam clamps 101 and end ring clamps 102 are preferably constructed in a similar manner and operate similarly; however, it should be appreciated that end ring clamps 102 may sometimes be physically larger than mandrel seam clamps 101 as these clamps are often placed on a vertical plane and accordingly, the joint in which they are placed may be slightly different from that where mandrel seam clamps 101 may be positioned.

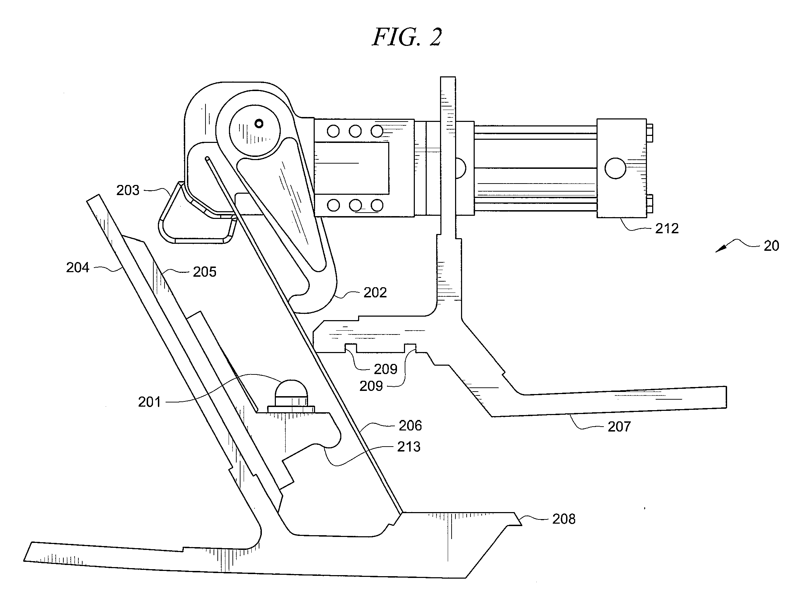

FIGURE 2 depicts mandrel segment joint 20 when the clamping and indexing mechanism according to an embodiment of the present invention is in an open position (i.e., not locked). Clamp body 212 provides an attachment point for clamp arm 202. Clamp arm 202 is eccentrically mounted to clamp body 212, meaning that it is mounted elsewhere than at the geometrical center of clamp body 212. Accordingly, in operation, clamp arm 202 moves in an elliptical path (i.e., deviates from a circular path) and thus provides more pull-up force to hold the mandrel segments in place. Clamp arm 202 is preferably modified so that when actuated (i.e., put into motion), it rotates about an eccentric or elliptical shaped axis. Clamp arm 202 preferably has a hook-like structure that, when actuated, pulls down to hook under clamp receiver 213, which is the preferred attachment point for clamp arm 202 according to embodiments of the present invention. Embodiments of the present invention preferably utilize a modified DeStaCo 991-MRM (TM) toggle clamp, although it should be appreciated that other types of pneumatic clamps may be preferably modified to form the clamping and indexing mechanism according to embodiments of the present invention.

Clamp body 212 preferably includes clamp arm(s) 202 that preferably clamp to clamp receiver 213. Clamp arm 202, according to an embodiment of the present invention, is air-actuated such that clamping and indexing mechanism 20 may be more easily incorporated and packaged into mandrels. Clamp arm 202 preferably incorporates an eccentric over-center locking mechanism; accordingly, once the air required to lock clamp arm 202 into position is removed, clamp arm 202 will remain locked and indexed until air is again applied to unclamp. Clamp arm 202 preferably has a hook-like shape that can pull-up onto clamp receiver 213 to more easily lock clamp arm 202 into place with clamp receiver 213. Preferably clamp arm 202 joins mandrel segments to each other and also may preferably join mandrel segments to end rings. The shape and mounting of clamp arm 202 provides for more pull-up force. Preferably the eccentric lever arm radius of clamp arm 202 is approximately 0.6 cm (0.250 inches) having a minimum pull-up force of approximately 680.388 Kg (1500 pounds) and a maximum pull-up force of approximately 1814.369 Kg (4000 pounds).

Clamp index 203 is of a preferred size and shape to affix to receiver index 201 when clamp arm 202 is actuated. Clamp index 203 is integrated with clamp body 212 such that clamping and indexing of the mandrel segments preferably occurs in an integrated and simultaneous manner. Clamp index 203 and receiver index 201 are preferably formed in a cup and cone configuration to index and locate clamp arm 202 in a desired position relative to clamp receiver 213. The use of a cup and cone indexing mechanism is a common way to locate surfaces to one another; however, the present invention integrates this cup and cone indexing mechanism with a clamping mechanism. Clamp receiver 213 is mounted to clamp receiver mounting plate 205 which is flush against mandrel substructure 204. Receiver index 201 also is affixed to clamp receiver 213 such that when clamping occurs, the indexing of the assembly occurs in an integrated manner along with the clamping mechanism as will be described in more detail below.

Clamp receiver 213 and receiver index 201 are preferably incorporated into the indexing and clamping mechanism of the present invention so as to encourage even distribution of the clamping forces during actuation as well as to permit some variation in the initial pre-clamp location or positioning. Clamp receiver 213 permits clamp arm 202 to tightly connect with clamp receiver 213 such that the mandrel segments may be tightly locked together. Receiver index 201 preferably connects with clamp index 203 which is integrated with clamp body 212 of the clamping mechanism such that the clamping and indexing mechanism guides the mandrel segments into the required position. Thus, the desired clamp force may be applied while pulling the mandrel segments into the proper location and position.

Mandrel face sheets 207, 208 preferably contact with one another when clamp arm 202 is actuated. Mandrel seal grooves 209 become flush with mandrel face sheet 208 when the clamping and indexing mechanism according to embodiments of the present invention is engaged. Mandrel extraction path 206 indicates the manner in which the mandrel becomes attached to and detached from the clamping and indexing mechanism according to embodiments of the present invention.

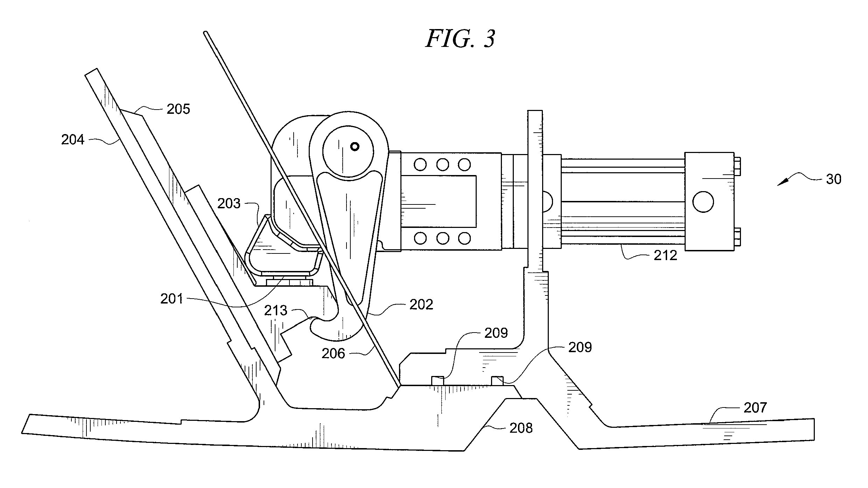

FIGURE 3 depicts clamped mandrel segment joint 30 when clamp arm 202 preferably has been actuated and then locked into position with clamp receiver 213. A pull-up force is exerted on clamp arm 202 such that clamp arm 202 is actuated and affixes to clamp receiver 213. In operation, clamp arm 202 preferably pulls down and folds around clamp receiver 213 using the hook-like shape of clamp arm 202. Clamp arm 202 then preferably makes contact with clamp receiver 213 and locks into the desired position. It should be appreciated that clamp arm 202 should preferably be positioned over the center portion of clamp receiver 213 before the clamping mechanism is locked into place. However, there may be embodiments wherein clamp arm 202 backs off the central portion of clamp receiver 213 without departing from the objects of the present invention.

When clamp arm 202 is actuated, clamp index 203, having a cup-like configuration and integrated with clamp body 212, pulls down to cover receiver index 201 wherein receiver index 201 is formed in a cone-like configuration. The integrated nature of clamp body 212 and clamp index 203 preferably allows for clamp index 203 and receiver index 201 to become flush with one another so as to assist in locating the clamping mechanism in the desired position for locking the mandrel segments into their preferred placement for use in manufacturing a barrel-shaped component. When clamp arm 202 is actuated and locked into place with clamp receiver 213, mandrel face sheets 207, 208 make contact such that seal grooves 209 are compressed with face sheet 208 to form a tight seal between mandrel face sheets 207, 208 during manufacturing.

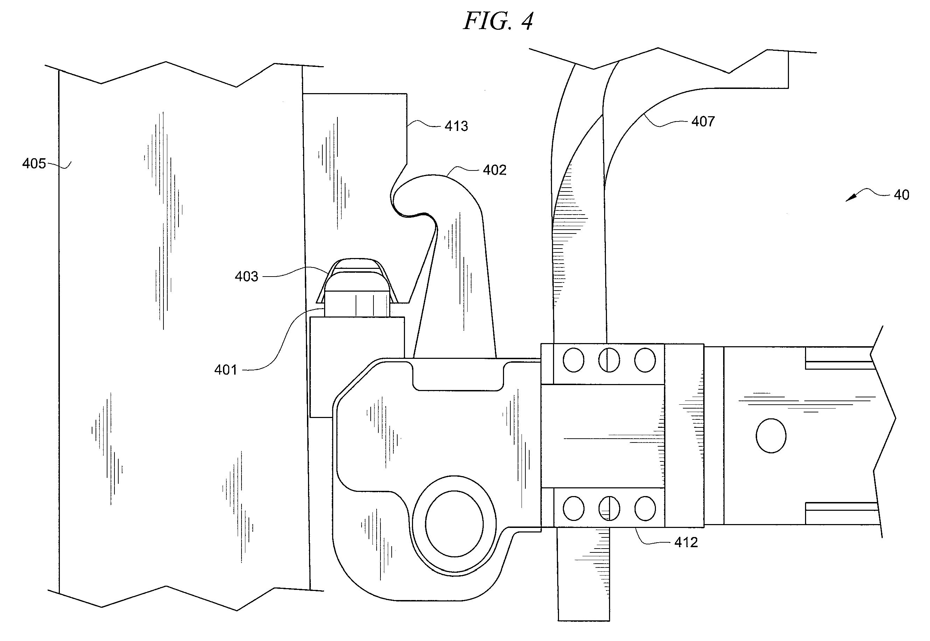

FIGURE 4 depicts clamped end ring assembly 40 when it is locked into position with end ring 405. Clamp body 412 provides the point of original attachment for clamp arm 402 when clamp arm 402 is both in locked and unlocked positions. When clamp arm 402 is actuated, the pull-up force preferably serves to move clamp arm 402 in an eccentric manner so as to lock in place with clamp receiver 413. Clamp index 401 is affixed to clamp body 412 such that when the clamping mechanism is actuated, clamp index 401 preferably makes contact with receiver index 403 and accordingly aligns with receiver index 403 such that when clamp index 401 is in place with respect to receiver index 403, the indexing mechanism formed by clamp index 401 and receiver index 403 preferably guides the clamping mechanism into place so as to ensure proper positioning and fastening of the mandrel segments.

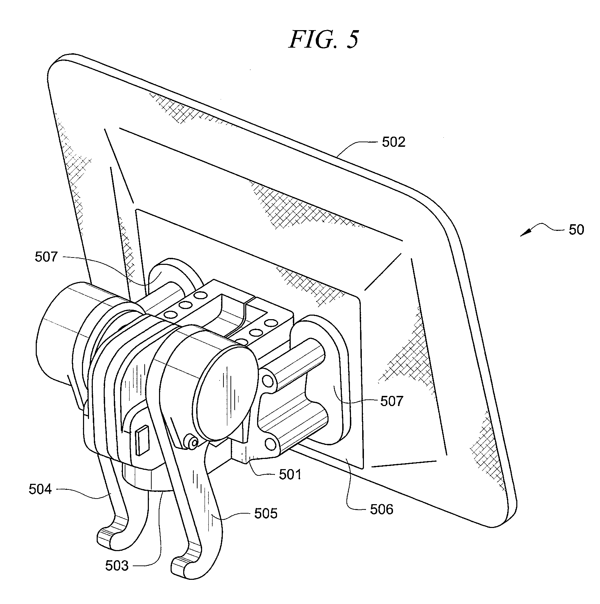

FIGURE 5 depicts a mandrel clamp attach configuration assembly according to an embodiment of the present invention. Mandrel clamp attach assembly 50 preferably includes clamp mounting pan 502 which is preferably made of invar or carbon/epoxy. Clamp mounting pan 502 provides a support for mounting clamp brackets 507 which support clamp arms 504, 505. Surface 506 is preferably the flat portion of clamp mounting pan 502 that provides the machined surface needed to provide the proper indexing for assembly 50. Clamp mounting pan is preferably incorporated into mandrel clamp attach assembly 50 to provide the desired strength and distance that is preferable for use of the clamping mechanism. Mandrel clamp attach assembly 50 also includes clamp cone index 503. Clamp cone index 503 is integrated with clamp body 501 such that when clamp arms 504, 505 are actuated, clamp cone index 503 makes contact with a receiver index (not shown) in order to guide clamp arms 504, 505 to be locked into place with a clamp receiver (not shown).

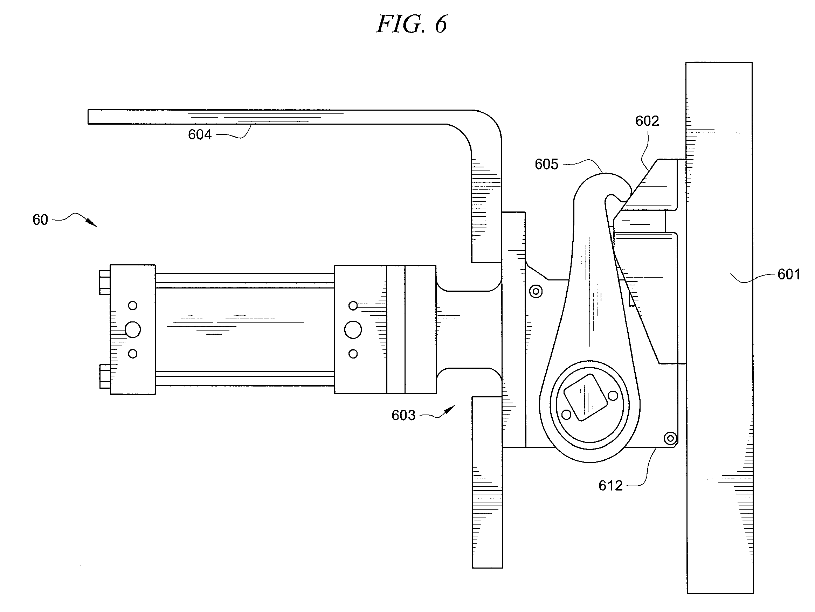

FIGURE 6 depicts an embodiment of the present invention illustrating assembly 60 using a clamping and indexing mechanism to locate a mandrel to an end ring. End ring 601 provides a surface for mounting receiver bracket 602. Receiver bracket 602 then preferably affixes to clamp arm 605 by a pulling-up motion upon actuation. Clamp arm 605 is mounted to clamp body 612. Mandrel face sheet 604 aligns adjacent to clamp body 612 upon actuation of the clamping mechanism wherein the minimal cutout size 603 between the clamp body 612 and mandrel face sheet 604 is illustrated.

Embodiments of the present invention utilizing a mechanism for integrated clamping and indexing of the mandrel segments and end rings provide improvements over the prior art bolting and clamping mechanisms. While clamping mechanisms may have been used in the past for fastening parts together, the present invention provides a novel means for integrating a clamping mechanism with an indexing mechanism in order to attach, through an automated process, the mandrel segments and end rings in a secure and accurately aligned manner, such that a tight seal may be formed between the mandrel segments and/or end rings during a manufacturing process. The clamping mechanism according to embodiments of the present invention is modified so as to increase the clamping force exerted by the clamping mechanism in order to more fully support the mandrel segments in an automated manner. As a tight seal is formed between the mandrel segments when the clamping and indexing mechanism of the present invention is utilized, this mechanism provides the advantage that the formed mandrel can withstand autoclave heat and pressure without breaking the seal between the respective mandrel segments and/or end rings.

Mandrel segments locked into position utilizing the clamping and indexing mechanism according to embodiments of the present invention were tested into the autoclave environment during a curing cycle. In order to conduct such tests, fiberglass was applied to the exterior of the locked mandrel segments, and the locked mandrel segments were run in the autoclave through a cure cycle. When the cure cycle was completed, the locked mandrel segments were removed and inspected. The mandrel segments locked together using the clamping and indexing mechanism of the present invention possessed good laminates so as to confirm no leaks had occurred in the mandrel. Other testing of the locked mandrel segments was performed using mandrel manipulators, and the results confirmed that the seals worked properly. According to embodiments of the present invention, when the locked mandrel segments are autoclaved and cured, the formed mandrel remains in its original shape and does not collapse or otherwise become deformed. Accordingly, the shape and positioning of the part being formed using the locked mandrel segments may be maintained.

Embodiments of the clamping and indexing mechanism of the present invention passively lock the mandrel segments together in a secure manner. The clamping and indexing mechanism preferably meets clamp-up travel needs and all known capacity needs. The clamping and indexing mechanism further successfully packages in available space using predominantly off-the-shelf clamp hardware.

## Claims

1. A system including a mandrel and a clamping index assembly for the mandrel, said system comprising:
a clamp body (212,412,501,612);
a clamp arms (202,402,504,505,605) integrated with said clamp body (212,412,501,612), and
a clamp cone index (203,403,503) integrated with said clamp body (212,412,501,612),
wherein upon actuation of said clamp arm (202,402,504,505,605), said clamp cone index (203,403,503) makes contact with a receiver index (201,401) to guide said clamp arm (202,402,504,505,605) to lock in place with a clamp receiver (213, 413), said system further comprising:
a secondary bolting mechanism to hold said mandrel in a locked position.

2. The system of claim 1, said system further comprising:
a clamp mounting pan (502), said clamp mounting pan (502) providing a support for mounting clamp brackets (507) which support clamp arms (504, 505).

3. The system of claim 1 further comprising an end ring (601), wherein said system locates said mandrel to an end ring (601).

4. The system of claim 3 wherein said end ring (601) provides a surface for mounting said clamp receiver.

5. The system of claim 1 wherein said clamp receiver (213,413) affixes to said clamp arm (202,402) by a pulling-up motion upon actuation of said clamp arm (202,402).

6. The system of claim 1 wherein said system joins mandrel segments together.

7. The system of claim 1 wherein said system joins a mandrel segment to an end ring.

8. The system of claim 6 wherein face-sheets (207,208) of said mandrel segments align and contact with each other when said clamp arm (202) is actuated.

9. The system of claim 1, said system further comprising:
a clamp mounting pan (502) wherein said clamp mounting pan (502) supports said clamp arm (504,505).

10. A method for integrated clamping and indexing a mandrel, said method comprising:
exerting pull-up force on a clamp arm (202,402,504,505,605);
actuating said clamp arm (202,402,504,505,605) such that said clamp arm (202,402,504,505,605) affixes to a clamp receiver (213,413); and
pulling down a clamp cone index (203,403,503) integrated with said clamp arm (202,402,504,505,605),
wherein said clamp cone index (203,403,503) contacts with a receiver index (201,401) integrated with said clamp receiver (213,413) upon actuation of said clamp arm (202,402,504,505,605);
and, wherein the indexing mechanism formed by said clamp cone index (203,403,503) and said receiver index (201,401) guides said clamp arm (202,402,504,505,605) into place relative to said clamp receiver (213,413), and wherein a secondary bolting mechanism holds a mandrel in a locked position

11. The method of claim 10 wherein said pull-up force moves said clamp arm (202,402,504,505,605) in an eccentric manner to lock in place with said clamp receiver (213, 413).

12. The method of claim 10 wherein said clamp index (203,403,503) has a cup-like configuration and said receiver index (201,401) has a cone-like configuration.

## Patentansprüche

1. System mit einem Dorn und einer Klammerindexanordnung für den Dorn, wobei das System aufweist:
einen Klammerkörper (212, 412, 501, 612);
einen Klammerarm (202, 402, 504, 505, 605), der mit dem Klammerkörper (212, 412, 501, 612) integriert ist; und
einen Klammerkegelindex (203, 403, 503), der mit dem Klammerkörper (212, 412, 501, 612) integriert ist,
wobei bei Betätigung des Klammerarms (202, 402, 504, 505, 605) der Klammerkegelindex (203, 403, 503) in Kontakt mit einem Empfängerindex (201, 401) tritt, um den Klammerarm (202, 402, 504, 505, 605) in einen Klammerempfänger (213, 413) einzurasten, wobei das System des Weiteren aufweist:
einen sekundären Bolzenmechanismus zum Halten des Dorns in verriegelter Position.

2. System nach Anspruch 1, wobei das System des Weiteren aufweist:
eine Klammerbefestigungsplatte (502), wobei die Klammerbefestigungsplatte (502) Halt zum Befestigen von Klammerhalterungen (507) bietet, die Klammerarme (504, 505) stützen.

3. System nach Anspruch 1, das des Weiteren einen Endring (601) aufweist, wobei das System den Dorn an einem Endring (601) anordnet.

4. System nach Anspruch 3, wobei der Endring (601) eine Oberfläche zum Befestigen des Klammerempfängers vorsieht.

5. System nach Anspruch 1, wobei der Klammerempfänger (213, 413) durch eine Hochziehbewegung bei Betätigung des Klammerarms (202, 402) an dem Klammerarm befestigt wird.

6. System nach Anspruch 1, wobei das System Dornsegmente zusammenfügt.

7. System nach Anspruch 1, wobei das System ein Dornsegment an einen Endring fügt.

8. System nach Anspruch 6, wobei Deckschichten (207, 208) der Dornsegmente miteinander ausgerichtet werden und in Berührung kommen, wenn der Klammerarm (202) betätigt wird.

9. System nach Anspruch 1, wobei das System des Weiteren aufweist:
eine Klammerbefestigungsplatte (502), wobei die Klammerbefestigungsplatte (502) den Klammerarm (504, 505) stützt.

10. Verfahren zum integrierten Klammern und Indexieren eines Dorns, wobei das Verfahren umfasst:
Ausüben einer Hochziehkraft auf einen Klammerarm (202, 402, 504, 505, 605);
Betätigen des Klammerarms (202, 402, 504, 505, 605), so dass der Klammerarm (202, 402, 504, 505, 605) an einem Klammerempfänger (213, 413) befestigt wird; und
Hinunterziehen eines Klammerkegelindexes (203, 403, 503), der mit dem Klammerarm (202, 402, 504, 505, 605) integriert ist,
wobei der Klammerkegelindex (203, 403, 503) bei Betätigung des Klammerarms (202, 402, 504, 505, 605) mit einem Empfängerindex (201, 401) in Kontakt tritt, der mit dem Klammerempfänger (213, 413) integriert ist; und
wobei der Indexiermechanismus, der durch den Klammerkegelindex (203, 403, 503) und den Empfängerindex (201, 401) gebildet wird, den Klammerarm (202, 402, 504, 505, 605) bezüglich des Klammerempfängers (213, 413) zum Einrasten bringt; und
wobei ein sekundärer Bolzenmechanismus einen Dorn in verriegelter Position hält.

11. Verfahren nach Anspruch 10, wobei die Hochziehkraft den Klammerarm (202, 402, 504, 505, 605) in exzentrischer Art und Weise bewegt, damit er mit dem Klammerempfänger (213, 413) verriegelt wird.

12. Verfahren nach Anspruch 10, wobei der Klammerindex (203, 403, 503) eine napfartige Konfiguration hat und der Empfängerindex (201, 401) eine kegelartige Konfiguration hat.

## Revendications

1. Système incluant un mandrin et un ensemble index de serrage pour le mandrin, ledit système comprenant :
un corps de serrage (212, 412, 501, 612) ;
un bras de serrage (202, 402, 504, 505, 605) intégré avec ledit corps de serrage (212, 412, 501, 612), et
un index de cône de serrage (203, 403, 503) intégré avec ledit corps de serrage (212, 412, 501, 612),
dans lequel lors de l'actionnement dudit bras de serrage (202, 402, 504, 505, 605), ledit index de cône de serrage (203, 403, 503) entre en contact avec un index récepteur (201, 401) destiné à guider ledit bras de serrage (202, 402, 504, 505, 605) afin qu'il se bloque en place avec un récepteur de serrage (213, 413), ledit système comprenant en outre :
un mécanisme de boulonnage secondaire destiné à tenir ledit mandrin dans une position de blocage.

2. Système selon la revendication 1, ledit système comprenant en outre :
un bac de montage de serrage (502), ledit bac de montage de serrage (502) servant de support pour le montage de consoles de serrage (507) qui supportent des bras de serrage (504, 505).

3. Système selon la revendication 1, comprenant en outre un anneau d'extrémité (601), dans lequel ledit système localise ledit mandrin au niveau d'un anneau d'extrémité (601).

4. Système selon la revendication 3, dans lequel ledit anneau d'extrémité (601) fournit une surface destinée au montage dudit récepteur de serrage.

5. Système selon la revendication 1, dans lequel ledit récepteur de serrage (231, 413) se fixe audit bras de serrage (202, 402) par un mouvement de traction vers le haut lors de l'actionnement dudit bras de serrage (202, 402).

6. Système selon la revendication 1, dans lequel ledit système joint des segments de mandrin ensemble.

7. Système selon la revendication 1, dans lequel ledit système joint un segment de mandrin à un anneau d'extrémité.

8. Système selon la revendication 6, dans lequel des feuilles de face (207, 208) desdits segments de mandrin s'alignent et entrent en contact l'une avec l'autre lorsque ledit bras de serrage (202) est actionné.

9. Système selon la revendication 1, ledit système comprenant en outre :
un bac de montage de serrage (502) dans lequel ledit bac de montage de serrage (502) supporte ledit bras de serrage (504, 505).

10. Procédé de serrage intégré et d'indexage d'un mandrin, ledit procédé comprenant :
l'exercice d'une force de traction vers le haut sur un bras de serrage (202, 402, 504, 505, 605) ;
l'actionnement dudit bras de serrage (202, 402, 504, 505, 605) de sorte que ledit bras de serrage (202, 402, 504, 505, 605) se fixe à un récepteur de serrage (213, 413) ; et
la traction vers le bas d'un d'index de cône de serrage (203, 403, 503) intégré avec ledit bras de serrage (202, 402, 504, 505, 605),
dans lequel ledit index de cône de serrage (203, 403, 503) entre en contact avec un index récepteur (201, 401) intégré avec ledit récepteur de serrage (213, 413) lors de l'actionnement dudit bras de serrage (202, 402, 504, 505, 605) ; et, dans lequel le mécanisme d'indexage formé par ledit index de cône de serrage (203, 403, 503) et ledit index récepteur (201, 401) guide ledit bras de serrage (202, 402, 504, 505, 605) en place par rapport audit récepteur de serrage (213, 413), et
dans lequel un mécanisme de boulonnage secondaire tient un mandrin dans une position bloquée.

11. Procédé selon la revendication 10, dans lequel ladite force de traction vers le haut déplace ledit bras de serrage (202, 402, 504, 505, 605) de façon excentrique afin de le bloquer en place avec ledit récepteur de serrage (213, 413).

12. Procédé selon la revendication 10, dans lequel ledit index de serrage (203, 403, 503) a une configuration en coupelle et ledit index récepteur (201, 401) a une configuration de type cône.
